Europäisches Patentamt

European Patent Office

Office européen des brevets

(11) Numéro de publication: **0 116 141
B1**

(12) FASCICULE DE BREVET EUROPEEN

(45) Date de publication du fascicule du brevet: **28.01.87**

(51) Int. Cl.⁴: **C 12 G 3/08, A 23 L 2/34**

(21) Numéro de dépôt: **83112179.3**

(22) Date de dépôt: **03.12.83**

(54) Procédé de fabrication d'une boisson gazéifiée naturellement.

(30) Priorité: **13.01.83 CH 162/83**

(43) Date de publication de la demande:
**22.08.84 Bulletin 84/34**

(45) Mention de la délivrance du brevet:
**28.01.87 Bulletin 87/05**

(84) Etats contractants désignés:
**AT BE CH DE FR IT LI LU NL SE**

(56) Documents cités:
**AU-A- 48 993
CH-A- 285 471
CH-A- 342 461
DE-A-2 353 780
FR-A- 472 483
FR-A- 908 079
US-A-3 120 441**

**CHEMICAL ABSTRACTS, vol. 93, no. 3, juillet
1980, page 548, no. 24467d, Columbus, Ohio,
USA**

(73) Titulaire: **SOCIETE DES PRODUITS NESTLE S.A.
Case postale 353
CH-1800 Vevey (CH)**

(72) Inventeur: **Darbyshire, John
Entremonts 26
CH-1400 Yverdon (CH)**
Inventeur: **Dasek, Jaroslav
Rue de Levant 2A
CH-1400 Yverdon (CH)**
Inventeur: **Hose, Hugh
Entremonts 28
CH-1400 Yverdon (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

0 116 141

## Description

La présente invention a pour objet un procédé de fabrication d'une boisson gazéifiée naturellement par fermentation d'un moût avec une levure.

On connaît depuis longtemps de nombreuses boissons obtenues par fermentation de liquides aqueux fermentescibles variés tels que jus de fruits, extraits de céréales, lait ou petit-lait p. ex. Diverses civilisations aux quatre coins du monde ont connu ou connaissent l'usage de boissons fermentées. La nature des microorganismes impliqués dépend de la nature du substrat. Pour certains breuvages, c'est une levure qui est en cause, notamment pour les boissons alcooliques telles que le vin et la bière, pour d'autres ce peut être une association de levures et de lactobacilles telle que celle utilisée dans la fabrication du kéfir à partir de lait de jument par exemple. Il a déjà été proposé par ailleurs de fabriquer des boissons diététiques rafraîchissantes par fermentation de petit-lait avec un mélange de cultures de yogourt et de cultures de kéfir.

Il a également été proposé de fabriquer des boissons de table gazéifiées naturellement par fermentation légère de jus de fruits avec des levures sélectionnées plutôt que par imprégnation de ces jus avec du gaz carbonique.

On connaît aussi par FR—A—908 079 un procédé de préparation d'une boisson gazéifiée naturellement à base de petit-lait et de jus de raisin, par fermentation au moyen d'une levure fermentant le lactose et de streptococcus lactis.

Chacune des boissons précitées a ses avantages et ses inconvénients. On peut reprocher au vin et à la bière une trop forte teneur en alcool et aux boissons obtenues à partir de lait une trop grande richesse et une trop grande viscosité p. ex. Quant aux boissons à partir de petit-lait, elles sont très typées et pas nécessairement au goût de chacun. Enfin, les avis peuvent êtres partagés sur les qualités organoleptiques de jus de fruits gazéifiés par fermentation légère à l'aide de seules levures. En effet, d'une part un arrière-goût de levure est très difficile à éviter et d'autre part la saveur et l'acidité naturelle du jus de fruit se perdent.

La présente invention a pour but de proposer un procédé sûr et contrôlable de fabrication reproductible et industrielle d'une boisson de table gazéifiée naturellement par une fermentation qui sublime la saveur originelle de jus de fruits sans laisser le moindre arrière-goût de levure et sans atténuer l'acidité naturelle desdits jus.

A cet effet, le procédé selon la présente invention est caractérisé par le fait que l'on fait fermenter le moût avec une combinaison d'au moins une levure et d'au moins un lactobacille sélectionnés la première dans le groupe formé par Saccharomyces cerevisiae et Kluyveromyces lactis et le second dans le groupe formé par Lactobacillus casei et Lactobacillus hilgardii pour leur aptitude à travailler ensemble d'une part et à produire un effet de synergie organoleptique éliminant tout arrière-goût de levure d'autre part, le moût étant inoculé de manière que les nombres respectifs de germes de levure et de lactobacille par ml soient dans un rapport compris entre 1:10 et 1:500. De préférence, le moût est inoculé avec 0,01—5% en volume d'un inoculum de levure contenant $10^7$—$10^{10}$ microorganismes viables ou germes/ml et 0,01—5% en volume d'un inoculum de lactobacilles contenant $10^8$—$10^{10}$ microorganismes viables ou germes/ml.

Par le terme de moût, on désigne dans le présent exposé d'une manière tout à fait générale une solution aqueuse de sucre fermentescible contenant également les éléments naturels, notamment l'azote assimilable, nécessaires à la croissance et à l'activité des levures. Un moût peut donc être un simple jus de fruit, mais aussi un jus de légumes, un extrait végétal de graine, de racine ou de feuille, ou de l'eau sucrée additionnée d'un concentré de jus fruit p. ex.

On a trouvé en effet que l'on peut produire industriellement de la présente manière une boisson gazéifiée naturellement présentant les qualités organoleptiques recherchées et que l'on peut même jouer finement et de manière reproductible sur l'intensité du goût et du bouquet en variant le rapport des germes de levure aux germes de lactobacille dans les limites indiquées.

Pour mettre en ouevre le présent procédé, on utilise de préférence comme matière première pour la fermentation un moût présentant au départ déjà une certaine acidité et contenant les facteurs de croissance nécessaires à la croissance et à l'activité des lactobacilles.

De préférence, on utilise un moût présentant une compositelle que ledit rapport des nombres respectifs de germes de levure et de lactobacille par ml reste pratiquement constant durant la fermentation. C'est ainsi que dans une forme préférée de réalisation du présent procédé on fait fermenter un moût contenant 1—15% en poids de saccharose, 0,1—5% en poids d'un concentré de jus de fruit et 0,01—0,5% en poids d'un activateur de croissance tel que les extraits de levures, les extraits de malt ou les hydrolysats de protéines p. ex. Sachant que d'une part les levures ne présentent pratiquement pas de croissance en régime anaérobie, que leur croissance sera donc pratiquement stoppée lorsqu'elles auront consommé l'oxygène dissout dans le moût, d'autre part que les lactobacilles ne peuvent pas croître sans activateur de croissance et enfin que la production anaérobie de $CO_2$ par la levure s'accompagne de la production d'une quantité pondérale pratiquement égale d'alcool, on peut choisir dans ces limites une composition du milieu permettant d'arriver exactement aux qualités organoleptiques recherchées dans le produit final.

Le temps durant lequel on fait fermenter le moût dépend entre autre de la levure employée et du taux d'alcool que l'on désire ne pas dépasser dans le produit final. Pour des boissons de table refraîchissantes, naturellement gazeuses qu'on ne désire pas voir considérer comme des boissons alcooliques, ce taux est

2

# 0 116 141

de préférence inférieur à environ 0,5%. Pour une température de fermentation égale à ou voisine de 30°C particulièrement favorable pour la présente combinaison de levures et de lactobacilles, le temps nécessaire pour arriver à cette limite de 0,5% d'alcool dans le moût est de l'ordre de environ 12 h si l'on utilise Kluyveromyces lactis et de environ 24 h si l'on utilise Saccharomyces cerevisiae en concentrations initiales de l'ordre d'environ $10^5$ germes/ml de moût. On peut également utiliser des températures de fermentation plus élevées, jusqu'à environ 40°C p. ex., la conséquence en étant que le travail de la levure est favorisé et celui du lactobacille défavorisé ce qui confère au moût fermenté un goût plus prononcé. On peut aussi utiliser des températures de fermentation moins élevées, p. ex. jusqu'à 20°C, la conséquence n'en étant guère autre chose qu'un ralentissement de la fermentation. D'une manière générale, pour une température de fermentation de 20—40°C et une teneur en alcool finale de moins de 0,5%, on peut considérer que la durée de la fermentation sera comprise entre environ 6 et 48 h.

En ce qui concerne la pression, on fait de préférence fermenter le moût sous la pression créée par le $CO_2$ dégagé durant la fermentation. Cette pression peut atteindre p. ex. 2—4 bars lorsqu'on arrête la fermentation après que le taux d'alcool dans le moût a atteint un niveau modédé qui ne confère pas à la boisson le caractère de boisson alcoolique.

Comme indiqué plus haut, on préfère démarrer la fermentation à un pH acide immédiatement favorable au travail des levures et des lactobacilles, à savoir un pH de environ 4 à 5. On peut aussi démarrer à un pH légèrement inférieur à 4, mais alors un ralentissement de la fermentation devient inévitable. Ce pH initial légèrement acide peut être obtenu en ajoutant au moût un concentré de jus de fruit p. ex., notamment d'agrume. Les concentrés du commerce sont généralement obtenus par une concentration d'un facteur 3 à 6 du jus naturel. Une fraction de % de concentré de citron ou quelques % de concentré de jus d'orange p. ex. peuvent ainsi donner au moût le pH initial recherché. Ce pH s'abaisse encore en cours de fermentation et peut descendre ainsi à une valeur finale comparable à celle présentée par un jus de fruit naturel tel qu'une orange ou un pamplemousse p. ex.

Pour arrêter la fermentation, on peut p. ex. refroidir brusquement à une température de 5—10°C et séparer rapidement la biomasse du moût fermenté. On peut réaliser cette séparation par filtration ou centrifugation p. ex. Il est possible d'abaisser de la sorte d'un facteur 1000 la concentration des germes de levure dans le moût ce qui suffit pour prévenir temporairement la continuation de la production de $CO_2$ et d'alcool et pour éviter les risques potentiels de développement de flaveurs indésirables par autolyse p. ex. Enfin, en poussant cette séparation mécanique jusqu'à l'élimination des lactobacilles, par l'usage de techniques de centrifugation et filtration adéquates p. ex., on peut même obtenir une clarification complète de la boisson, si on le désire.

Selon le moût duquel on est parti, on peut compléter la formulation de la boisson en ajoutant au moût fermenté un jus de fruit et/ou un arôme p. ex. Cette manière de faire donne une plus grande souplesse au procédé en permettant de préparer une base fermentée unique utilisable pour la fabrication de boissons présentant différentes nuances ou types de goûts et d'arômes. Pour préparer une telle base on utilise de préférence un concentré de jus de citron dans la formule indiquée ci-dessus, le citron conférant à cette base la note rafraîchissante et acide recherchée sans lui donner un goût très typé.

Enfin, la boisson est de préférence mise en bouteilles et pasteurisée. La pasteurisation peut s'effectuer dans des conditions usuelles allant de 20—40 min à 65°C à 1—3 min à 80°C p. ex.

Lorsqu'il s'agit de choisir les microorganismes nécessaires à la mise en oeuvre du présent procédé, on peut réaliser des essais tests avec diverses souches des espèces indiquées ci-dessus, en utilisant au moins une levure avec au moins un lactobacille. On a fait de très nombreux tests dans le cadre du présent procédé, portant sur des dizaines, voire une centaine de microorganismes de diverses origines.

On a obtenu de particulièrement bons résultats avec au moins une des deux souches de levures déposées le 17 décembre 1982 à la National Collection of Yeast Cultures (NCYC) en Grande Bretagne, à savoir Saccharomyces cerevisiae NCYC 1439 et Kluyveromyces lactis NCYC 1440 en combinaison avec au moins une des six souches de lactobacilles déposées le 20 décembre 1982 à la National Collection of Industrial Bacteria (NCIB) en Grande-Bretagne, à savoir Lactobacillus (L.) hilgardii NCIB 11818 et NCIB 11819 et L. casei NCIB 11814 à NCIB 11817.

Les exemples ci-après sont présentés à titre d'illustration. Les pourcentages y sont donnés en poids sauf indication contraire.

## Example 1

On prépare un moût présentant un pH de 4,0 en dissolvant dans l'eau 0,3% d'un concentré de jus de citron, 0,1% d'extrait de levure en poudre et 2% de saccharose. On pasteurise ce moût 2 min à 80°C et on en remplit un fermenteur de 1000 l préalablement stérilisé. On porte la température du moût à 26°C et on l'inocule avec 0,02% en volume d'une culture de Saccharomyces cerevisiae NCYC 1439 contenant $2 \times 10^9$ germes/ml et 0,6% en volume d'une culture de Lactobacillus casei NCIB 11817 contenant $4 \times 10^9$ germes/ml. Les nombres respectifs initiaux des germes de levure et de lactobacille dans le moût sont donc de $4 \times 10^5$ et $2,4 \times 10^7$ par ml et leur rapport est de 1:60. On laisse la fermentation se dérouler à 26°C sous la pression créée par le $CO_2$ dégagé dans le moût qui atteint environ 3 bars au moment où l'on arrête le processus, à savoir après environ 18 h, lorsque la concentration en alcool produit dans le moût atteint presque 0,5%. On stoppe la fermentation en refroidissant le fermenteur à 5°C. Durant toute la fermentation, on a agité légèrement le moût de manière à maintenir les germes en suspension, à assurer l'homogénéité du moût et à ne pas laisser se former des gradients de température.

3

On sépare alors les germes du moût fermenté par une centrifugation sous pression et l'on obtient une boisson de base fermentée incolore, claire, naturellement gazéifiée, que l'on peut consommer telle quelle ou après l'avoir aromatisée, qui donne dans la bouche une agréable impression de fraîcheur et ne présente pas le moindre arrière-goût de levure. Telle quelle, elle présente une saveur relativement neutre.

On prépare plusieurs lots de boissons aromatisées en ajoutant à la boisson de base soit un jus de fruit, notamment un jus d'orange à raison d'une partie de jus pour 10 parties de base, soit un concentré de fruit, notamment des concentrés de pamplemousse, de pomme et d'ananas, soit enfin un arôme, notamment des arômes de thé et de cola. On obtient chaque fois une boisson rafraîchissante typée, dont le caractère aromatique est littéralement sublimé sous l'effet des caractères organoleptiques propres à la base.

### Exemple 2

On prépare un moût présentant un pH de 4,8 en dissolvant dans l'eau 2% d'un concentré de jus d'orange, 0,1% d'extrait de levure à 80% de matière sèche et 2% de saccharose. Après pasteurisation et introduction dans le fermenteur, on inocule le moût avec 3% en volume d'une suspension de Kluyveromyces lactis NCYC 1440 dans une solution de saccharose isotonique contenant $5 \times 10^7$ germes/ml et 3% en volume d'une suspension de Lactobacillus hilgardii NCIB 11819 dans une solution de saccharose isotonique contenant $10^9$ germes/ml. Les nombres respectifs initiaux des germes de lavure et de lactobacille dans le moût sont donc de $1,5 \times 10^6$ et $3 \times 10^7$ et leur rapport est de 1:20. On laisse la fermentation se dérouler à 30°C durant 6 h. On refroidit, on sépare les germes du moût fermenté et l'on obtient une boisson naturellement pétillante présentant des qualités organoleptiques semblables à celles de la boisson de base obtenue à l'exemple 1 mais avec un parfum d'orange et un goût plus accentué. On la met en bouteille et on la pasteurise.

### Exemples 3—6

On prépare quatre boissons de la manière décrite aux exemples 1 et 2 tout en variant légèrement les ingrédients, les inoculums et les conditions comme présenté dans le tableau ci-aprés.

| Ex. No. | Souche | Inoculum | | Moût Composition % poids |
| --- | --- | --- | --- | --- |
| | | Volume % vol | Concentration germes /ml | |
| 3 | S. cerevisiae NCYC 1439 | 0,1 | $1,1 \times 10^8$ | saccharose 1 % |
| | | | | extrait levure 0,1 % |
| | L. casei NCIB 11815 | 0,4 | $5,5 \times 10^8$ | conc. pamplemouse 1 % |
| 4 | S. cerevisiae NCYC 1439 | 0.1 | $1,3 \times 10^8$ | saccharose 10 % |
| | | | | extrait malt 0,03 % |
| | L. casei NCIB 11814 | 0,4 | $1,8 \times 10^9$ | conc. pamplemouse 1 % |
| 5 | S. cerevisiae NCYC 1439 | 0,1 | $9 \times 10^7$ | saccharose 2 % |
| | | | | conc. citron 0.2 % |
| | L. casei NCIB 11817 | 0,4 | $4.5 \times 10^9$ | hydr. protéines 0.1 % |
| 6 | S. cerevisiae NCYC 1439 | 0,3 | $1.5 \times 10^7$ | saccharose 2 % |
| | | | | conc. citron 0.2 % |
| | L. casei NCIB 11816 | 0,3 | $7,5 \times 10^8$ | hydr. protéines 0.1 % |
| | L. hilgardii NCIB 11818 | 0,3 | $7.5 \times 10^8$ | |

| Ex. No. | Moût | | | Fermentation | |
|---|---|---|---|---|---|
| | germes / ml | Rapport S : L | pH initial | température | durée |
| 3 | S. $1,1 \times 10^5$<br>L. $2,2 \times 10^6$ | 1 : 20 | 4,5 | 30°C | 24 h |
| 4 | S. $1,3 \times 10^5$<br>L. $7,2 \times 10^6$ | 1 : 55 | 4,5 | 35 C | 15 h |
| 5 | S. $9 \times 10^4$<br>L. $1,8 \times 10^7$ | 1 : 200 | 4,2 | 30°C | 24 h |
| 6 | S. $5 \times 10^4$<br>L. $2,5 \times 10^6$<br>L. $2,5 \times 10^6$ | 1 : 50 : 50 | 4,2 | 25°C | 36 h |

On obtient quatre boissons naturellement pétillantes et rafraîchissantes présentant des qualités organoleptiques irréprochables, à savoir aucun arrière-goût de levure mais une note fruitée remarquable caractéristique du pamplemousse pour les ex. 3 et 4 et relativement neutre pour les ex. 5 et 6. La saveur des boissons des ex. 4 et 6 est bien affirmée et celle de la boisson de l'ex. 3 encore plus, alors que celle de la boisson de l'exemple 5 est particulièrement fine et discrète. La boisson de l'ex. 3 n'est pas du tout sucrée, tout le sucre ayant été converti en $CO_2$ et en alcool, alors que la boisson de l'ex. 4 est très sucrée.

Les boissons sont mises en bouteille sous pression de gaz carbonique et pasteurisées. Elles se conservent parfaitement durant 6 mois à 4, 20 et 30°C.

*Nota bene:* Toutes les souches mentionnées dans le présent exposé ont été déposées dans leurs collections respectives conformément au Traité de Budapest.

**Revendications**

1. Procédé de fabrication d'une boisson gazéifiée naturellement par fermentation d'un moût avec une levure, caractérisé par le fait que l'on fait fermenter le moût avec une combinaison d'au moins une levure et d'au moins un lactobacille sélectionnés la première dans le groupe formé par Saccharomyces cerevisiae et Kluyveromyces lactis et le second dans le groupe formé par Lactobacillus casei et Lactobacillus hilgardii pour leur aptitude à travailler ensemble d'une part et à produire un effet de synergie organoleptique éliminant tout arrière-goût de levure d'autre part, le moût étant inoculé de manière que les nombres respectifs de germes de levure et de lactobacille par ml soient dans un rapport compris entre 1:10 et 1:500.

2. Procédé selon la revendication 1, caractérisé par le fait que le moût est inoculé avec 0,01—5% en volume d'un inoculum de levure contenant $10^7$—$10^{10}$ germes/ml et 0,01—5% en volume d'un inoculum de lactobacilles contenant $10^8$—$10^{10}$ germes/ml.

3. Procédé selon la revendication 1, caractérisé par le fait que l'on fait fermenter un moût contenant 1—15% en poids de saccharose, 0,1—5% en poids d'un concentré de jus de fruit et 0,01—0,5% en poids d'un activateur de croissance choisi dans le groupe formé par les extraits de levures, les extraits de malt et les hydrolysats de protéines.

4. Procédé selon la revendication 1, caractérisé par le fait que le moût présente un pH initial compris entre 4 et 5.

5. Procédé selon la revendication 1, caractérisé par le fait que l'on fait fermenter le moût durant 6—48 h à une température comprise entre 20 et 40°C sous la pression créée par le $CO_2$ dégagé durant la fermentation.

6. Procédé selon la revendication 1, caractérisé par le fait qu'après la fermentation on sépare lesdits germes du moût par filtration ou centrifugation.

7. Procédé selon la revendication 1, caractérisé par le fait que l'on ajoute un jus de fruit et/ou un arôme au moût fermenté.

8. Procédé selon la revendication 1, caractérisé par le fait que l'on pasteurise le moût fermenté.

9. Procédé selon la revendication 1, caractérisé par le fait que ledit groupe de levures est formé par Saccharomyces cerevisiae NCYC 1439 et Kluyveromyces lactis NCYC 1440, et ledit groupe de lactobacilles est formé par Lactobacillus hilgardii NCIB 11818, Lactobacillus higardii NCIB 11819, Lactobacillus casei NCIB 11814, Lactobacillus casei NCIB 11815, Lactobacillus casei NCIB 11816 et Lactobacillus casei NCIB 11817.

5

**Patentansprüche**

1. Verfahren zur Herstellung eines durch Fermentation eines Mostes mit einer Hefe auf natürliche Weise kohlensäurehaltigen Getränkes, dadurch gekennzeichnet, daß man den Most mit einer Kombination von wenigstens einer Hefe und wenigstens eines Lactobacillus vergären läßt, wobei die erstgenannte aus der aus Saccharomyces cerevisiae und Kluyveromyces lactis bestehenden Gruppe ausgewählt ist, und wobei der letztgenannte aus der aus Lactobacillus casei und Lactobacillus hilgardii bestehenden Gruppe ausgewählt ist, und zwar wegen der Fähigkeit dieser Mikroorganismen, einerseits zusammenzuarbeiten, und anderseits einen synergistischen, organoleptischen Effekt zu erzielen, wobei jeglicher Hefenachgeschmack eliminiert wird; und daß der Most auf solche Art und Weise beimpft wird, daß die Anzahl der Hefezellen und die Anzahl der Lactobacilluszellen je ml in einem Verhältnis zueinander stehen, welches zwischen 1:10 und 1:500 liegt.

2. Verfahren nach Anspruch 1, dadurch gekennzeichnet, daß der Most mit 0,01 bis 0,5 Vol.-% eines Hefebeimpfungsmaterials beimpft wird, welches $10^7$—$10^{10}$ Zellen/ml enthält, und daß der Most weiterhin mit 0,01 bis 5 Vol.-% eines Lactobacillenbeimpfungsmaterials beimpft wird, welches $10^8$—$10^{10}$ Zellen/ml enthält.

3. Verfahren nach Anspruch 1, dadurch gekennzeichnet, daß man einen Most vergärt, welcher 1 bis 15 Gew.-% Saccharose, 0,1 bis 5 Gew.-% eines Fruchtsaftkonzentrates und 0,01 bis 0,5 Gew.-% eines Wachstumsaktivators enthält, wobei der Wachstumsaktivator aus der aus Hefeextrakt, Malzextrakt und Proteinhydrolysat umfassenden Gruppe ausgewählt ist.

4. Verfahren nach Anspruch 1, dadurch gekennzeichnet, daß der Most einen Anfangs-pH-Wert zwischen 4 und 5 hat.

5. Verfahren nach Anspruch 1, dadurch gekennzeichnet, daß man den Most während 6 bis 48 Stunden bei einer zwischen 20 und 40°C liegenden Temperatur und unter dem Druck vergären läßt, der durch das während der Fermentation freigesetzte $CO_2$ erzeugt wird.

6. Verfahren nach Anspruch 1, dadurch gekennzeichnet, daß man nach der Fermentation die genannten Zellen durch Filtration oder Zentrifugieren von dem Most abtrennt.

7. Verfahren nach Anspruch 1, dadurch gekennzeichnet, daß man zu dem vergorenen Most einen Fruchtsaft und/oder einen Aromastoff zusetzt.

8. Verfahren nach Anspruch 1, dadurch gekennzeichnet, daß man den vergorenen Most pasteurisiert.

9. Verfahren nach Anspruch 1, dadurch gekennzeichnet, daß die genannte Gruppe von Hefen aus Saccharomyces cerevisiae NCYC 1439 und Kluyveromyces lactis NCYC 1440 besteht, und daß die ganannte Gruppe von Lactobacillen aus Lactobacillus hilgardii casei NCIB 11818, Lactobacillus hilgardii NCIB 11819, Lactobacillus casei NCIB 11814, Lactobacillus casei NCIB 11815, Lactobacillus casei 11816 und Lactobacillus casei NCIB 11817 besteht.

**Claims**

1. A process for the manufacture of a beverage which has been naturally carbonated by fermenting a must with a yeast, characterised in that the must is fermented with a combination of at least one yeast and at least one lactobacillus, the former being selected from the group of *Saccharomyces cerevisiae* and *Kluyveromyces lactis* and the latter being selected from the group of *Lactobacillus casei* and the latter being selected from the group of *Lactobacillus casei* and *Lactobacillus hilgardii,* for their symbiotic ability and capability to produce a synergistic organoleptic effect which eliminates all after-taste of yeast, the must being inoculated such that the respective numbers of yeast germs and lactobacillus germs per ml are in a ratio of from 1:10 to 1:500.

2. A process according to claim 1, wherein the must is inoculated with from 0.01 to 5% by volume of a yeast inoculum containing from $10^7$ to $10^{10}$ germs per ml and from 0.01 to 5% by volume of a lactobacillus inoculum containing from $10^8$ to $10^{10}$ germs per ml.

3. A process according to claim 1, wherein a must is fermented, which contains from 1 to 15% by weight of sucrose, from 0.1 to 5% by weight of a fruit juice concentrate and from 0.01 to 0.5% by weight of a growth factor which is selected from the group constituted by a yeast extract, a malt extract and a protein hydrolysate.

4. A process according to claim 1, wherein the must has an initial pH of between 4 and 5.

5. A process according to claim 1, wherein the must is fermented for from 6 to 48 h at a temperature of from 20 to 40°C under pressure created by the release of $CO_2$ during fermentation.

6. A process according to claim 1, wherein after fermentation, the germs are separated from the must by filtration or centrifugation.

7. A process according to claim 1, wherein a fruit juice and/or a flavouring are added to the fermented must.

8. A process according to claim 1, wherein the fermented must is pasteurised.

9. A process according to claim 1, wherein the yeast group is constituted by *Saccharomyces cerevisiae* NCYC 1439 and *Kluyveromyces lactis* NCYC 1440, and the lactobacillus group is constituted by *Lactobacillus hilgardii* NCIB 11818, *Lactobacillus hilgardii* NCIB 11819, *Lactobacillus casei* NCIB 11814, *Lactobacillus casei* NCIB 11815, *Lactobacillus casei* NCIB 11816 and *Lactobacillus casei* NCIB 11817.